Europäisches Patentamt

European Patent Office

Office européen des brevets

(11) Publication number: **0 360 564 B1**

# EUROPEAN PATENT SPECIFICATION

(45) Date of publication of patent specification: **29.12.93**  (51) Int. Cl.5: **C04B 35/10**, C04B 35/46, B22D 19/00

(21) Application number: **89309524.0**

(22) Date of filing: **19.09.89**

(54) **Method of producing a ceramic material for insert casting.**

(30) Priority: **20.09.88 JP 233391/88**

(43) Date of publication of application:
**28.03.90 Bulletin 90/13**

(45) Publication of the grant of the patent:
**29.12.93 Bulletin 93/52**

(84) Designated Contracting States:
**BE DE FR GB SE**

(56) References cited:
**EP-A- 0 285 312**
**DE-A- 3 706 209**
**FR-A- 2 302 981**
**US-A- 3 578 471**
**US-A- 4 483 944**

(73) Proprietor: **NGK INSULATORS, LTD.**
**2-56, Suda-cho, Mizuho-ku**
**Nagoya City Aichi Pref.(JP)**

(72) Inventor: **Fukao, Kaname**
**21-63 Aza-Sagidera**
**Ohaza-Goromaru**
**Inuyama City Aichi Pref.(JP)**
Inventor: **Harada, Takashi**
**248, Ohari 1-Chome**
**Meito-Ku**
**Nagoya City Aichi Pref.(JP)**
Inventor: **Hamanaka, Toshiyuki**
**682-1, Minamiwakamatsu-Cho**
**Suzuka City Mie Pref.(JP)**

(74) Representative: **Paget, Hugh Charles Edward et al**
**MEWBURN ELLIS**
**2 Cursitor Street**
**London EC4A 1BO (GB)**

**Description**

The present invention relates to a method of producing a ceramic material for insert casting, such as a hollow ceramic pipe to be wrapped by a cast molten metal, such as aluminum, iron, etc., particularly a ceramic material used as a lining of an inner surface of a cast exhaust gas port of gasoline engines, Diesel engines, and the like.

Recently, environmental pollution by exhaust gases of automobiles engines is a serious social problem, and catalysts are increasingly used for removing noxious substances from the exhaust gases, in order to solve the problem. Pt, Rh, and the like noble metals used in the catalysts are requested to reduce the amount of usage from the view points of limited resources and expensive cost. Also, recently increased four valved engines have provided a problem of decreasing a purifying property of the catalysts due to decrease of temperature of the exhaust gases.

For solving these problems, a method has been proposed wherein an inner surface of an exhaust gas port of engines is lined with a ceramic port liner to increase the temperature of the exhaust gas by the heat insulative function of the lining. For applying a ceramic port liner on an exhaust gas port of an engine, generally the ceramic port liner is insert cast by a cast molten aluminum, etc., simultaneously with the production of a cylinder head of the engine. However, this method has a drawback in that a large compression stress is exerted on the ceramic port liner due to shrinkage of the molten metal at the time of solidification, so that the ceramic liner is destructed even when it has a high strength, when the compression stress is concentrated and exerted locally at the time of solidification of the cast molten metal.

Hollow ceramic pipes usable for the cast wrapping are proposed by Japanese Patent Publication Nos. 46-26,330, 51-16,168, 60-5,544, and 56-7,996.

The invention of Japanese Patent Publication No. 46-26,330 makes the surface of ceramics consisting of alumina or silicon carbide of a high strength porous to cause the ceramics conform with the shrinkage of the solidifying molten metal. However, such insert casted composite material is in an yielded state of having latent minute cracks, so that if it is used as a lining or liner of an engine which accompanies violent vibrations during use, the cracks apt to grow to deteriorate the durability of the composite material considerably.

The invention of Japanese Patent Publication No. 51-16,168 relates to a method of producing a heat insulative cast article aimed for low elastic modulus, which is a flexible intermediate ceramics product composed of refractory aggregates and an alumina cement and having an elastic modulus of $93 \times 10^8$ $N/m^2$ ($950$ $kg/mm^2$) at the minimum, so that it has also a danger of being destroyed by the compression stress at the time of the insert casting.

The invention of Japanese Patent Publication No. 60-5,544 aims to achieve a low expansion property (thermal shock stability) and a high strength by adding kaoline and magnesium silicate to aluminum titanate. However, achieved elastic modulus is $8 \times 10^9$ $N/m^2$ ($8 \times 10^3$ $N/mm^2$) at the minimum, so that the destruction due to the compression stress at the time of the insert casting can not perfectly be prevented.

The invention of Japanese Patent Publication No. 56-7,996 provides a low thermal expansion property and a high strength property by an addition of $SiO_2$ and $ZrO_2$ to aluminum titanate, wherein growth of crystal grains of aluminum titanate is restricted by the addition of these additives. However, the invention has also the drawbacks as mentioned above about the aforementioned known inventions.

In addition to the above prior techniques, many attempts have been made of mitigating the compression stress of the ceramic material caused by the insert cast metal by coating the outer periphery of the ceramic material with ceramic fibers, or the like. However, such attempts resulted in increase of cost due to increase of steps of applying the ceramic fibers on the outer periphery of the ceramic material, and have a serious drawback of unavoidable droppings of the ceramic material, when the elasticity of the ceramic fibers is lost.

Therefore, an object of the present invention is to obviate the above problems and drawbacks.

The present invention is able to provide a method of producing a ceramic material for insert casting, which has superior heat resistant, thermal shock resistant and heat insulation properties, and reduces risk of forming a crack even when the compression stress is exerted thereon by the shrinkage of the molten metal which was insert casted on the ceramic material.

The present invention is a method of producing a ceramic material for insert casting, wherein an alumina source material having an $Al_2O_3$ content of not over 96 wt% and an average particle diameter of not less than 3 $\mu$m and a titania source material having an average particle diameter of not over 3 $\mu$m are mixed to form a powdery mixture of a desired composition, shaped, and sintered.

Prior researches were performed to make crystal grains of the ceramic material fine so as to increase the strength of the ceramic material. However, the inventors made many researches and experiments in an

2

effort of achieving the above objects to find out that the formation of cracks at the time of insert casting the ceramic material with a cast metal can be prevented by imparting a rubber-like elasticity to the ceramic material through decrease of Young's modulus of the ceramic material and not through an increase of the strength of the ceramic material.

The present invention has been accomplished based on the above finding, and uses a coarse $Al_2O_3$ source material and a fine $TiO_2$ source material in combination. An excellent ceramic material for insert casting may be obtained, having 65% or more of aluminum titanate in the crystal phases, the aluminum titanate having an average crystal diameter of not less than 10 $\mu$m, a Young's modulus of 49 $\times$ 10$^7$ - 196 $\times$ 10$^8$ N/m$^2$ (50-2,000 kgf/mm$^2$), a compression strength of 49 $\times$ 10$^6$ - 392 $\times$ 10$^6$ N/m$^2$ (5-40 kgf/mm$^2$), and a porosity of 5-35%.

In producing the ceramic material according to the present invention, for example, raw materials are selected from alumina, raw soda alumina, calcined bauxite, refined rutile, crude rutile, anataze type titanium oxide, ilmenite, ferrite rouge, electrofused magnesium oxide, magnesite, electrofused spinel, kaolin, quartz, and electrofused silica, etc., so as to obtain a composition having in weight basis 40-65% of $Al_2O_3$, 30-60% of $TiO_2$, and not over 10% of at least one of $SiO_2$, $MgO$, and $Fe_2O_3$.

At this time, an $Al_2O_3$ source material having $Al_2O_3$ content of not over 96 wt% and an average particle diameter of not less than 3 $\mu$m, and a $TiO_2$ source material having an average particle diameter of not over 3 $\mu$m should be selected and mixed.

The composition is added with 0.1-1.0% of a deflocculant selected from water glass, ammonium polycarboxylate, amines and sodium pyrophosphate, etc., and 1.0-5.0% of a binder selected from PVA, MC, CMC and acrylates, etc., and mixed and agitated completely in a trommel or a pot mill with an added amount of 15-40% of water to prepare a slurry of a viscosity of 200-1,000 cp. The slurry is shaped by a casting method into a cylindrical or a port liner shape, then dried and sintered. As a result, a sintered body of aluminum titanate containing not less than 65% of aluminum titanate in the crystal phases and other crystal phases of at least one of rutile, corundum, and mullite, and having superior heat resistant, thermal shock resistant and heat insulation properties, can be obtained.

By selecting the sintering conditions to, for example, about 1,450-1,650°C, preferably about 1,500-1,600°C, and about 1-16 hrs, crystal grains of aluminum titanate can be completely grown to an average grain size of not less than 10 $\mu$m, contrary to prior common knowledge. An aluminum titanate has thermal expansion coefficients of plus in the axes a and b, and minus in the axis c, and differences of the thermal expansion coefficients are so large that the crystal boundaries and the crystals *per se* can not withstand to differences between expansion and shrinkage in respective axial directions at the time of cooling the sintered body, so that a large number of microcracks is formed between the crystal grains and in the crystal grains. The inventors have found out that, if the crystal grains of aluminum titanate are grown to 10 $\mu$m or more, frequency and size of microcracks are increased corresponding to remarkable decrease of Young's modulus. Therefore, as a result of such growth of crystal grains, a great number of microcracks are formed on boundary of the crystal grains and in the crystal grains, and the sintered ceramic material has a characteristic property that the inner spaces in the microcracks approach to each other or deviate from each other depending on an extraneous force, so that the obtained ceramic material can have physical properties of a Young's modulus of 49 $\times$ 10$^7$ - 196 $\times$ 10$^8$ N/m$^2$ (50-2,000 kgf/mm$^2$), a compression strength of 49 $\times$ 10$^6$ - 392 $\times$ 10$^6$ N/m$^2$ (5-40 kgf/mm$^2$), and a porosity of 5-35%. When the molten metal insert casted on the ceramic material shrinks, the ceramic material having such low Young's modulus can shrink simultaneously with the cast metal, so that it does not form a crack even if it has such a complicated configuration that conventional ceramic materials having high strengths and high Young's moduli are destructed due to local concentration of the compression stresses.

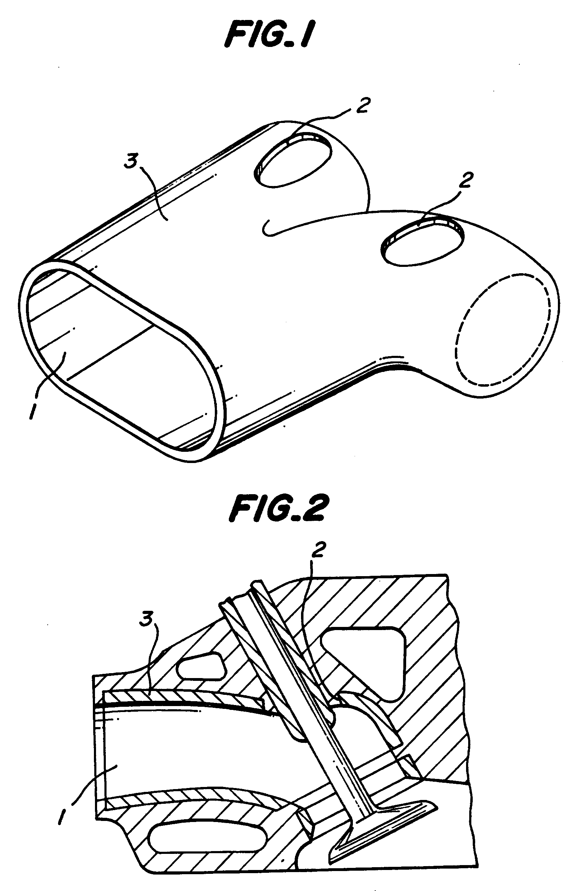

Therefore, the present invention is suited well of course to the production of not only a cylinder type port liner, but also other complicated configurations, such as a complicated port liner 3 having two ports 2 at the cylinder side of a four valved engine and a single exhaust gas port 1 at the exhaust manifold side of the engine, as shown in Figs. 1 and 2. In addition, because the sintered body has microcracks, thermal conductivity thereof is decreased, and a sufficient heat insulation effect can be exhibited, even though the porosity thereof is relatively small.

Because aluminum titanate formed in the ceramic material has a high melting point of not less than 1,700°C, a molten metal for insert casting the ceramic material is not specifically limited, so that various metals, such as gray cast iron, particulated graphite cast iron, white cast iron, aluminum alloy, copper alloy, magnesium alloy, or zinc alloy, etc., can be used for the insert casting.

The $Al_2O_3$ source material and the $TiO_2$ source material are limited in the present invention by the following reasons.

If the $Al_2O_3$ source material has a purity higher than 96% and an average particle diameter of not less than 3 $\mu$m, the reactivity of the $Al_2O_3$ source material is so low that unreacted residues remain in the ceramic material after the sintering and the Young's modulus of the ceramic material becomes higher than 196 $\times$ 10$^8$ N/m$^2$ (2,000 kgf/mm$^2$) so that there arises an afraid of forming a crack when the insert casting is effected. Also, if the $Al_2O_3$ source material has an average particle diameter of less than 3 $\mu$m, the aluminum titanate in the ceramic materials has an average particle diameter of less than 10 $\mu$m and a Young's modulus exceeding 196 $\times$ 10$^8$ N/m$^2$ (2,000 kgf/mm$^2$), regardless to the purity of the $Al_2O_3$ source material. Further, if the impurities contained in the $Al_2O_3$ source material exceed in weight basis 20% of $SiO_2$, 20% of $Fe_2O_3$ or 20% of a sum of $SiO_2$ and $Fe_2O_3$, the aluminum titanate crystals in the ceramic material is apt to less than 65% and crystal grains of aluminum titanate is apt to less than 10 $\mu$m. From the aforedescribed reasons, the $Al_2O_3$ source material should have a purity of not exceeding 96% and an average particle diameter of not less than 3 $\mu$m, and preferably have an impurities content of 0-20% of $SiO_2$, 0-20% of $Fe_2O_3$, or 0-20% of a sum of $SiO_2$ and $Fe_2O_3$. Typically the $Al_2O_3$ content is at least 80%.

If the $TiO_2$ source material has an average particle diameter of exceeding 3 $\mu$m, unreacted residues becomes large in the sintered ceramic material, and the Young's modulus of the ceramic material exceeds 2,000 kgf/mm$^2$, so that there arises a danger of forming cracks if the ceramic material is insert casted by a molten metal. Therefore, the $TiO_2$ source material should have an average particle diameter of not exceeding 3 $\mu$m.

For a better understanding of the present invention, reference is made to the accompanying drawings, in which:

Fig. 1 is a schematic perspective view of a port liner for a four valved engine; and

Fig. 2 is a schematic crosssectional view of a port liner after insert casted by an engine head.

Numberings in the drawings.

1 --- exhaust gas port
2 --- port
3 --- port liner

Hereinafter, the present invention will be explained in more detail with reference to examples.

Example 1

$Al_2O_3$ source materials having compositions and average particle diameter as shown in the following Table 1 and $TiO_2$ source materials having compositions and average particle diameter as shown in the following Table 2, are used as essential raw materials to prepare raw materials having compositions of Test Nos. 1-48 as shown in Table 3. The raw materials are casted in molds to obtain ellipsocylindrical test pieces having a wall thickness of 3 mm, a long diameter of 64 mm, and a short diameter of 36 mm. The test pieces are sintered in the respective conditions as described in Table 3, and the obtained ceramic materials are tested on various properties. Then, the test pieces are packed with mold sands, and insert casted by a molten aluminum to obtain metal-ceramic composite bodies having an aluminum wall thickness of 7 mm. After removed the mold sands, the test pieces are checked on an occurrence of crack. The results are shown in the last line of Table 3.

EP 0 360 564 B1

Table 1

| Raw material No. | | A-1 | A-2 | A-3 | A-4 | A-5 | A-6 | A-7 | A-8 | A-9 | A-10 | A-11 | A-12 | A-13 | A-14 |
|---|---|---|---|---|---|---|---|---|---|---|---|---|---|---|---|
| Chemical composition (wt%) | $SiO_2$ | 0.0 | 0.9 | 2.0 | 2.6 | 2.7 | 2.7 | 2.6 | 2.4 | 1.0 | 0.0 | 7.6 | 4.2 | 0.9 | 18.1 |
| | $Al_2O_3$ | 99.8 | 98.1 | 96.2 | 94.6 | 94.8 | 94.8 | 94.5 | 95.3 | 98.0 | 99.8 | 85.8 | 85.5 | 84.5 | 66.9 |
| | $Fe_2O_3$ | 0.0 | 0.1 | 0.3 | 0.5 | 0.5 | 0.5 | 0.4 | 0.4 | 0.1 | 0.0 | 1.3 | 5.1 | 5.2 | 3.3 |
| | $TiO_2$ | 0.0 | 0.6 | 1.3 | 2.0 | 1.8 | 2.1 | 1.5 | 1.7 | 0.7 | 0.0 | 5.0 | 5.0 | 9.1 | 11.5 |
| | Others | 0.2 | 0.3 | 0.2 | 0.3 | 0.2 | 0.2 | 0.3 | 0.2 | 0.2 | 0.2 | 0.3 | 0.2 | 0.3 | 0.2 |
| Average particle diameter (µm) | | 12.9 | 12.9 | 13.3 | 13.0 | 9.8 | 5.3 | 3.1 | 1.4 | 3.3 | 1.2 | 13.1 | 8.2 | 8.0 | 7.8 |

Table 2

| Raw material No. | | T-1 | T-2 | T-3 | T-4 | T-5 | T-6 |
|---|---|---|---|---|---|---|---|
| Chemical composition (wt%) | $SiO_2$ | 0.0 | 0.0 | 0.0 | 0.0 | 0.1 | 0.2 |
| | $A\ell_2O_3$ | 0.0 | 0.0 | 0.0 | 0.0 | 1.7 | 3.3 |
| | $Fe_2O_3$ | 0.0 | 0.0 | 0.0 | 0.0 | 0.0 | 0.1 |
| | $TiO_2$ | 99.5 | 99.6 | 99.4 | 99.5 | 97.6 | 95.5 |
| | Others | 0.5 | 0.4 | 0.6 | 0.5 | 0.6 | 0.9 |
| Average particle diameter ($\mu$m) | | 10.6 | 5.8 | 3.1 | 0.7 | 1.0 | 0.9 |

Table 3(a)

| Test No. | | 1 | 2 | 3 | 4 | 5 | 6 | 7 | 8 | 9 | 10 |
|---|---|---|---|---|---|---|---|---|---|---|---|
| $Al_2O_3$ source material | | A-3 | A-3 | A-3 | A-4 | A-7 | A-7 | A-7 | A-3 | A-3 | A-3 |
| $TiO_2$ source material | | T-3 | T-4 | T-6 | T-4 | T-3 | T-4 | T-6 | T-3 | T-4 | T-5 |
| Composition (wt%) | $Al_2O_3$ | 49.3 | 49.3 | 49.3 | 49.3 | 49.3 | 49.3 | 49.3 | 54.3 | 54.3 | 54.3 |
| | $TiO_2$ | 47.5 | 47.5 | 47.5 | 47.5 | 47.5 | 47.5 | 47.5 | 42.5 | 42.5 | 42.5 |
| | $Fe_2O_3$ | 1.6 | 1.6 | 1.6 | 1.6 | 1.6 | 1.6 | 1.6 | 1.6 | 1.6 | 1.6 |
| | $SiO_2$ | 1.6 | 1.6 | 1.6 | 1.6 | 1.6 | 1.6 | 1.6 | 1.6 | 1.6 | 1.6 |
| Sintering temperature (°C) | | 1550 | 1550 | 1550 | 1550 | 1550 | 1550 | 1550 | 1550 | 1550 | 1550 |
| Young's modulus ($9.8 \times 10^6 \ N/m^2$) | | 1090 | 980 | 950 | 220 | 1530 | 1320 | 1290 | 880 | 780 | 750 |
| Compression strength ($9.8 \times 10^6 N/m^2$) | | 16 | 15 | 15 | 11 | 26 | 25 | 25 | 15 | 14 | 14 |
| Porosity (%) | | 12.8 | 11.0 | 10.8 | 7.2 | 10.1 | 9.8 | 9.7 | 13.6 | 11.5 | 11.0 |
| AT Average crystal grain diameter (μm) | | 18 | 17 | 17 | 22 | 11 | 11 | 12 | 19 | 19 | 20 |
| AT Crystal amount (%) | | 72 | 76 | 77 | 88 | 86 | 91 | 91 | 80 | 83 | 85 |
| CTE ($\times 10^{-6}$/°C) | | 0.1 | -0.7 | -0.8 | -1.1 | -1.1 | -1.2 | -1.2 | -0.9 | -1.0 | -0.9 |
| Heat conductivity ($10^{-3}$ W/m k) ($10^{-3}$cal/cm sec°C) | | 41.9 (1.0) | 46.1 (1.1) | 46.1 (1.1) | 50.3 (1.2) | 50.3 (1.2) | 50.3 (1.2) | 54.5 (1.3) | 37.7 (0.9) | 41.9 (1.0) | 46.1 (1.1) |
| Crystal phases other than AT | | rutile | rutile | rutile | rutile | rutile | rutile | rutile | - | - | - |
| Cracks (after casting) | | none | none | none | none | none | none | none | none | none | none |
| Remarks | | Invention | | | | | | | | | |

Notes: AT means aluminum titanate,    CTE means thermal expansion coefficient

Table 3(b)

| Test No. | | 11 | 12 | 13 | 14 | 15 | 16 | 17 | 18 | 19 | 20 |
|---|---|---|---|---|---|---|---|---|---|---|---|
| $Al_2O_3$ source material | | A-3 | A-4 | A-5 | A-6 | A-7 | A-7 | A-7 | A-7 | A-11 | A-12 |
| $TiO_2$ source material | | T-6 | T-4 | T-4 | T-4 | T-3 | T-4 | T-5 | T-6 | T-4 | T-4 |
| Composition (wt%) | $Al_2O_3$ | 54.3 | 54.3 | 54.3 | 54.3 | 54.3 | 54.3 | 54.3 | 54.3 | 53.0 | 52.8 |
| | $TiO_2$ | 42.5 | 42.5 | 42.5 | 42.5 | 42.5 | 42.5 | 42.5 | 42.5 | 41.5 | 41.4 |
| | $Fe_2O_3$ | 1.6 | 1.6 | 1.6 | 1.6 | 1.6 | 1.6 | 1.6 | 1.6 | 0.8 | 3.2 |
| | $SiO_2$ | 1.6 | 1.6 | 1.6 | 1.6 | 1.6 | 1.6 | 1.6 | 1.6 | 4.7 | 2.6 |
| Sintering temperature (°C) | | 1550 | 1550 | 1550 | 1550 | 1550 | 1550 | 1550 | 1550 | 1550 | 1550 |
| Young's modulus ($9.8 \times 10^6 \ N/m^2$) | | 760 | 80 | 100 | 910 | 1210 | 1160 | 1080 | 1110 | 360 | 380 |
| Compression strength ($9.8 \times 10^6 \ N/m^2$) | | 13 | 8 | 9 | 15 | 24 | 23 | 23 | 23 | 19 | 19 |
| Porosity (%) | | 11.6 | 8.8 | 9.3 | 9.2 | 11.1 | 9.7 | 9.5 | 9.5 | 5.5 | 7.4 |
| AT Average crystal grain diameter (µm) | | 19 | 23 | 20 | 15 | 13 | 13 | 14 | 14 | 19 | 18 |
| AT Crystal amount (%) | | 85 | 93 | 94 | 94 | 89 | 96 | 95 | 95 | 90 | 89 |
| CTE ($\times 10^{-6}$/°C) | | -1.1 | -1.3 | -1.2 | -1.2 | -1.1 | -1.2 | -1.2 | -1.2 | -1.3 | -1.3 |
| Heat conductivity ($10^{-3} W/m \ k$) ($10^{-3}$cal/cm sec°C) | | 41.9 (1.0) | 46.1 (1.1) | 46.1 (1.1) | 46.1 (1.1) | 46.1 (1.1) | 46.1 (1.1) | 46.1 (1.1) | 46.1 (1.1) | 58.7 (1.4) | 58.7 (1.4) |
| Crystal phases other than AT | | - | - | - | - | - | - | - | - | - | - |
| Cracks (after casting) | | none | none | none | none | none | none | none | none | none | none |
| Remarks | | Invention | | | | | | | | | |

Table 3(c)

| Test No. | | 21 | 22 | 23 | 24 | 25 | 26 | 27 | 28 | 29 |
|---|---|---|---|---|---|---|---|---|---|---|
| $Al_2O_3$ source material | | A-13 | A-3 | A-3 | A-3 | A-3 | A-3 | A-3 | A-4 | A-7 |
| $TiO_2$ source material | | T-4 | T-3 | T-4 | T-6 | T-3 | T-4 | T-6 | T-4 | T-3 |
| Composition (wt%) | $Al_2O_3$ | 53.9 | 58.0 | 58.0 | 58.0 | 54.3 | 54.3 | 54.3 | 54.3 | 54.3 |
| | $TiO_2$ | 42.2 | 38.8 | 38.8 | 38.8 | 42.5 | 42.5 | 42.5 | 42.5 | 42.5 |
| | $Fe_2O_3$ | 3.3 | 1.6 | 1.6 | 1.6 | 1.6 | 1.6 | 1.6 | 1.6 | 1.6 |
| | $SiO_2$ | 0.6 | 1.6 | 1.6 | 1.6 | 1.6 | 1.6 | 1.6 | 1.6 | 1.6 |
| Sintering temperature (°C) | | 1550 | 1550 | 1550 | 1550 | 1600 | 1600 | 1600 | 1600 | 1600 |
| Young's modulus $(9.8 \times 10^6 \, N/m^2)$ | | 120 | 1430 | 1210 | 1280 | 230 | 180 | 170 | 60 | 560 |
| Compression strength $(9.8 \times 10^6 \, N/m^2)$ | | 7 | 25 | 22 | 22 | 12 | 11 | 11 | 6 | 15 |
| Porosity (%) | | 9.3 | 14.3 | 13.7 | 13.6 | 7.1 | 6.4 | 6.6 | 5.2 | 5.9 |
| AT Average crystal grain diameter (μm) | | 18 | 17 | 17 | 18 | 26 | 25 | 26 | 27 | 17 |
| AT Crystal amount (%) | | 91 | 72 | 81 | 81 | 94 | 95 | 95 | 95 | 94 |
| CTE $(\times 10^{-6}/°C)$ | | -1.3 | -0.1 | -0.1 | -0.1 | -1.3 | -1.3 | -1.3 | -1.3 | -1.3 |
| Heat conductivity $(10^{-3} W/m\,k)$ $(10^{-3}$cal/cm sec°C) | | 46.1 (1.1) | 54.5 (1.3) | 50.3 (1.2) | 50.3 (1.2) | 37.7 (0.9) | 37.7 (0.9) | 37.7 (0.9) | 41.9 (1.0) | 41.9 (1.0) |
| Crystal phases other than AT | | - | corundum | corundum | corundum | - | - | - | - | - |
| Cracks (after casting) | | none | none | none | none | none | none | none | none | none |
| Remarks | | Invention | | | | | | | | |

Table 3(d)

| Test No. | | 30 | 31 | 32 | 33 | 34 | 35 | 36 |
|---|---|---|---|---|---|---|---|---|
| $Al_2O_3$ source material | | A-7 | A-7 | A-2 | A-8 | A-4 | A-1 | A-2 |
| $TiO_2$ source material | | T-4 | T-6 | T-4 | T-4 | T-2 | T-4 | T-4 |
| Composition (wt%) | $Al_2O_3$ | 54.3 | 54.3 | 49.3 | 49.3 | 49.3 | 54.3 | 54.3 |
| | $TiO_2$ | 42.5 | 42.5 | 47.5 | 47.5 | 47.5 | 42.5 | 42.5 |
| | $Fe_2O_3$ | 1.6 | 1.6 | 1.6 | 1.6 | 1.6 | 1.6 | 1.6 |
| | $SiO_2$ | 1.6 | 1.6 | 1.6 | 1.6 | 1.6 | 1.6 | 1.6 |
| Sintering temperature (°C) | | 1600 | 1600 | 1550 | 1550 | 1550 | 1550 | 1550 |
| Young's modulus ($9.8 \times 10^6 N/m^2$) | | 330 | 350 | 2340 | 2830 | 2510 | 2240 | 2390 |
| Compression strength ($9.8 \times 10^6 N/m^2$) | | 13 | 13 | 9 | 44 | 7 | 6 | 7 |
| Porosity (%) | | 6.1 | 6.0 | 38.3 | 10.3 | 43.1 | 42.7 | 38.6 |
| AT Average crystal grain diameter (μm) | | 17 | 18 | 12 * | 6 | 7 | 13 * | 13 * |
| AT Crystal amount (%) | | 95 | 95 | 58 | 90 | 56 | 55 | 60 |
| CTE ($\times 10^{-6}$/°C) | | -1.3 | -1.3 | 2.2 | -1.0 | 2.5 | 2.3 | 2.3 |
| Heat conductivity ($10^{-3} W/m\,k$) ($10^{-3}$cal/cm sec°C) | | 41.9 (1.0) | 41.9 (1.0) | 117.3 (2.8) | 46.1 (1.1) | 138.3 (3.3) | 113.1 (2.7) | 113.1 (2.7) |
| Crystal phases other than AT | | - | - | rutil corundum | rutile | rutil corundum | rutil corundum | rutil corundum |
| Cracks (after casting) | | none | none | cracked | cracked | cracked | cracked | cracked |
| Remarks | | Invention | | Referential | | | | |

Note: * having uncreated residue

EP 0 360 564 B1

## Table 3(e)

| Test No. | | 37 | 38 | 39 | 40 | 41 | 42 |
|---|---|---|---|---|---|---|---|
| $Al_2O_3$ source material | | A-8 | A-10 | A-4 | A-4 | A-9 | A-11 |
| $TiO_2$ source material | | T-4 | T-4 | T-1 | T-2 | T-4 | T-2 |
| Composition (wt%) | $Al_2O_3$ | 54.3 | 54.3 | 54.3 | 54.3 | 54.3 | 53.0 |
| | $TiO_2$ | 42.5 | 42.5 | 42.5 | 42.5 | 42.5 | 41.5 |
| | $Fe_2O_3$ | 1.6 | 1.6 | 1.6 | 1.6 | 1.6 | 0.8 |
| | $SiO_2$ | 1.6 | 1.6 | 1.6 | 1.6 | 1.6 | 4.7 |
| Sintering temperature (°C) | | 1550 | 1550 | 1550 | 1550 | 1550 | 1550 |
| Young's modulus ($9.8 \times 10^6 N/m^2$) | | 2790 | 2970 | 2410 | 2350 | 2220 | 2150 |
| Compression strength ($9.8 \times 10^6 N/m^2$) | | 41 | 47 | 7 | 8 | 18 | 10 |
| Porosity (%) | | 11.8 | 12.6 | 41.1 | 40.4 | 31.6 | 36.3 |
| AT Average crystal grain diameter (μm) | | 5 | 2 | 13* | 13* | 4* | 9* |
| AT Crystal amount (%) | | 91 | 92 | 51 | 58 | 68 | 64 |
| CTE ($\times 10^{-6}$/°C) | | -1.1 | -1.1 | 2.5 | 2.4 | 2.1 | 2.1 |
| Heat conductivity ($10^{-3} W/m\ k$) ($10^{-3}$cal/cm sec°C) | | 50.3 (1.2) | 50.3 (1.2) | 142.5 (3.4) | 138.3 (3.3) | 117.3 (2.8) | 125.7 (3.0) |
| Crystal phases other than AT | | - | - | rutil corundum | rutil corundum | rutil corundum | rutil corundum |
| Cracks (after casting) | | cracked | cracked | cracked | cracked | cracked | cracked |
| Remarks | | Referential | | | | | |

## Table 3(f)

| Test No. | | 43 | 44 | 45 | 46 | 47 | 48 |
|---|---|---|---|---|---|---|---|
| Al$_2$O$_3$ source material | | A-14 | A-2 | A-10 | A-2 | A-10 | A-4 |
| TiO$_2$ source material | | T-4 | T-4 | T-4 | T-4 | T-4 | T-2 |
| Composition (wt%) | Al$_2$O$_3$ | 47.4 | 58.0 | 58.0 | 54.3 | 54.3 | 54.3 |
| | TiO$_2$ | 37.4 | 38.8 | 38.8 | 42.5 | 42.5 | 42.5 |
| | Fe$_2$O$_3$ | 2.3 | 1.6 | 1.6 | 1.6 | 1.6 | 1.6 |
| | SiO$_2$ | 12.9 | 1.6 | 1.6 | 1.6 | 1.6 | 1.6 |
| Sintering temperature (°C) | | 1550 | 1550 | 1550 | 1600 | 1600 | 1600 |
| Young's modulus ($9.8 \times 10^6 N/m^2$) | | 2030 | 2910 | 3560 | 2110 | 2660 | 2030 |
| Compression strength ($9.8 \times 10^6 N/m^2$) | | 31 | 10 | 55 | 8 | 39 | 7 |
| Porosity (%) | | 12.4 | 44.3 | 14.2 | 39.7 | 10.8 | 36.1 |
| AT Average crystal grain diameter (μm) | | 9 | 13* | 2 | 13* | 5 | 13* |
| AT Crystal amount (%) | | 51 | 57 | 85 | 64 | 93 | 63 |
| CTE ($\times 10^{-6}$/°C) | | 0.5 | 2.9 | 0.2 | 2.0 | -1.2 | 2.2 |
| Heat conductivity ($10^{-3}$W/m k) ($10^{-3}$cal/cm sec°C) | | 230.5 (5.5) | 146.7 (3.5) | 58.7 (1.4) | 83.8 (2.0) | 54.5 (1.3) | 104.8 (2.5) |
| Crystal phases other than AT | | mullite | rutil corundum | corundum | rutil corundum | – | rutil corundum |
| Cracks (after casting) | | cracked | cracked | cracked | cracked | cracked | cracked |
| Remarks | | Referential | | | | | |

As seen from the foregoing explanations, according to the method of producing a ceramic material for cast wrapping of the present invention, an excellent ceramic material suited well to be insert casted by a molten metal can be provided having crystal phases of aluminum titanate of 65% or more in the crystal phases, the crystal phases of aluminum titanate having an average grain size of 10 μm or more, a Young's modulus of 49 × 10⁷ - 196 × 10⁸ N/m² (50-2,000 kgf/mm²), a compression strength of 49 × 10⁶ - 392 × 10⁶ N/m² (5-40 kgf/mm²), and a porosity of 5-35%, by using an Al₂O₃ source material of a specific coarse particle sizes and a TiO₂ source material of a specific fine particle sizes.

12

## Claims

1. A method of producing a ceramic material for insert casting, wherein an alumina source material having an $Al_2O_3$ content of not over 96 wt% and an average particle diameter of not less than 3 $\mu$m and a titania source material having an average particle diameter of not over 3 $\mu$m are mixed to form a powder mixture of a desired composition, shaped, and sintered.

2. A method of producing a ceramic material as defined in claim 1, wherein the powder mixture has a composition by weight of 40-65% of $Al_2O_3$, 30-60% of $TiO_2$, and 10% of at least one of $SiO_2$, MgO and $Fe_2O_3$.

3. A method of producing a ceramic material as defined in claim 1 or 2, wherein the powder mixture contains 0.1-1.0 wt% of deflocculant.

4. A method of producing a ceramic material as defined in claim 1, 2 or 3, wherein the powder mixture after shaping is sintered at a temperature in the range of 1,450-1,650 °C.

## Patentansprüche

1. Verfahren zur Herstellung eines Keramikmaterials als Einsatzstück beim Gießen, worin ein Tonerdequellen-Material mit einem $Al_2O_3$-Gehalt nicht über 96 Gew.-% und einem durchschnittlichen Teilchendurchmesser von nicht weniger als 3 $\mu$m und ein Titandioxidquellen-Material mit einem durchschnittlichen Teilchendurchmesser nicht über 3 $\mu$m gemischt werden, um eine Pulvermischung mit einer gewünschten Zusammensetzung zu bilden, geformt und gesintert werden.

2. Verfahren zur Herstellung eines Keramikmaterials nach Anspruch 1, worin die Pulvermischung eine Gewichtszusammensetzung von 40-65% $Al_2O_3$, 30-60% $TiO_2$ und 10% von zumindest einem aus $SiO_2$, MgO und $Fe_2O_3$ aufweist.

3. Verfahren zur Herstellung eines Keramikmaterials nach Anspruch 1 oder 2, worin die Pulvermischung 0,1-1,0 Gew.-% Entflockungsmittel enthält.

4. Verfahren zur Herstellung eines Keramikmaterials nach Anspruch 1, 2 oder 3, worin die Pulvermischung nach dem Formen bei einer Temperatur im Bereich von 1.450-1.650 °C gesintert wird.

## Revendications

1. Procédé de fabrication d'un matériau céramique pour coulée composite, dans lequel un matériau source d'alumine ayant un contenu de $Al_2O_3$ qui n'est pas supérieur à 96% en poids et un diamètre moyen des particules qui n'est pas inférieur à 3 $\mu$m et un matériau source de dioxyde de titane ayant un diamètre moyen des particules qui n'est pas supérieur à 3 $\mu$m sont mélangés pour former un mélange de poudres d'une composition à obtenir, qui est mis en forme et fritté.

2. Procédé de fabrication d'un matériau céramique selon la revendication 1, dans lequel le mélange de poudres a une composition en poids de 40-65% de $Al_2O_3$, 30-60% de $TiO_2$ et 10% d'au moins l'un de $SiO_2$ MgO et $Fe_2O_3$.

3. Procédé de fabrication d'un matériau céramique selon la revendication 1 ou 2, dans lequel le mélange de poudres contient 0,1-1,0% en poids de défloculant.

4. Procédé de fabrication d'un matériau céramique selon les revendications 1 2 ou 3, dans lequel le mélange de poudres après la mise en forme est fritté à une température dans la plage de 1.450-1.650 °C.

# FIG.1

# FIG.2